# FASCICULE DE BREVET EUROPEEN

(11) **EP 0 447 301 B1**
(45) Date de publication et mention de la délivrance du brevet: **10.05.1995**
(21) Numéro de dépôt: 91400629.1
(22) Date de dépôt: 07.03.1991
(51) Int. Cl.: G01K 5/72

(54) **Détecteur de température notamment pour la surveillance de la température des moteurs de véhicules automobiles**
Temperaturmessgerät, insbesondere für die Temperaturüberwachung in Automobilmotoren
Temperatur detector, notably for the surveillance of temperature in motor vehicle engines

(30) Priorité: 08.03.1990 FR 9002960
(43) Date de publication de la demande: 18.09.1991
(73) Titulaire: JAEGER, F-92303 Levallois-Perret (FR)
(72) Inventeur: Dupuy, Christian, F-92000 Nanterre (FR); Seby, André, F-92370 Chaville (FR)
(74) Mandataire: Martin, Jean-Jacques

(56) Documents cités:
- EP-A- 0 064 798
- FR-A- 2 267 731
- FR-A- 2 450 450
- FR-A- 2 582 398
- US-A- 3 507 037
- MACHINE DESIGN, vol. 59, no. 11, 14 May 1987, CLEVELAND, US, page 152, "Differential-Expansion Types".

## Description

La présente invention concerne le domaine des dispositifs détecteurs de température à contact d'alerte commandés par bilame, notamment pour la surveillance de la température des moteurs de véhicules automobiles.

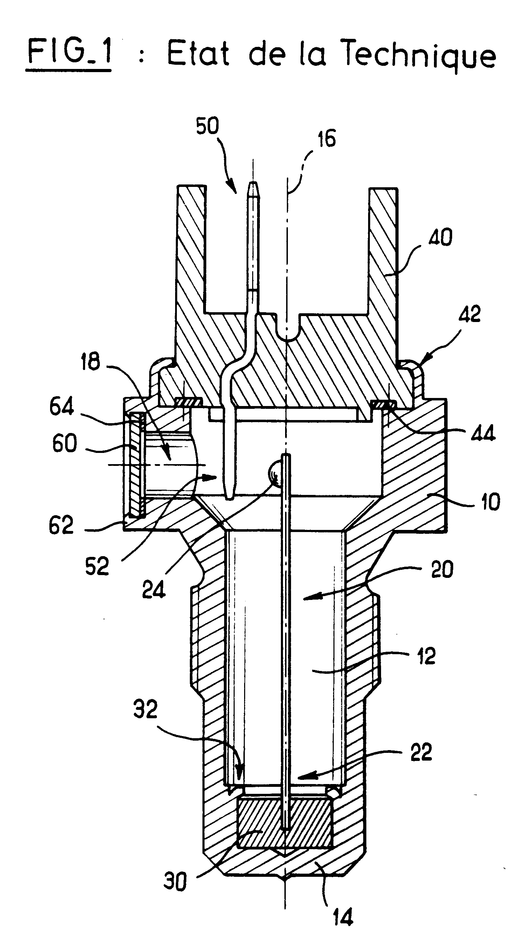

On a représenté schématiquement sur la figure 1 annexée un dispositif détecteur de température à bilame connu.

Un détecteur de température du type représenté sur la figure 1 annexée est par exemple décrit dans le document FR-A-2582398.

On aperçoit sur la figure 1 annexée un boîtier 10 réalisé en matériau thermiquement et électriquement conducteur. Le boîtier 10 définit une chambre interne borgne 12 qui loge un élément bilame 20. Plus précisément, l'une des extrémités 22 du bilame 20 est fixée, par exemple par sertissage sur une embase 30 elle-même fixée, par exemple par sertissage en 32 sur le fond 14 du boîtier. Ainsi l'élément bilame 20 s'étend au repos selon l'axe 16 du boîtier. Le bilame 20 est relié thermiquement et électriquement au boîtier 10 par l'intermédiaire de l'embase 30.

La chambre 12 du boîtier 10 est obturée par un capuchon 40 réalisé en un matériau électriquement isolant. Le capuchon 40 est fixé, par exemple par sertissage en 42 sur le boîtier 10. De préférence, un joint d'étanchéité annulaire 44 est intercalé entre le capuchon 40 et le boîtier 10.

Le capuchon 40 supporte une lamelle de contact 50. Celle-ci traverse le capuchon 40.

L'extrémité 52 de la lamelle 50 interne à la chambre 12 est placée au regard d'un grain de contact 24 porté par la seconde extrémité du bilame 20. L'état de liaison électrique entre la lamelle 50 et le grain de contact 24, qui correspond à l'état de contact entre la lamelle 50 et le boîtier 10 dépend de la déflexion du bilame 20, donc de la température détectée.

Selon la disposition du bilame 20, il peut s'agir soit d'un contact qui s'ouvre lorsque la température détectée passe au-dessus d'un seuil prédéterminé, soit inversement d'un contact qui se ferme lorsque la température détectée passe au-dessus du seuil déterminé.

Les dispositifs détecteurs de température connus du type représenté sur la figure 1 annexée requièrent un réglage après positionnement du bilame dans le boîtier 10, c'est-à-dire après sertissage de l'embase 30 sur le fond 14 du boîtier.

Ce réglage est opéré par déformation permanente de la lame de contact fixe 50 obtenue en poussant celui-ci au-delà de sa limite élastique au moyen d'un outil introduit dans le boîtier 10 par un trou de travail 18 ménagé latéralement dans la paroi du boîtier 10. Après réglage et retrait de l'outil correspondant, ce trou 18 est obturé par un opercule 60 serti en 62 sur un joint d'étanchéité annulaire 64.

Les dispositifs connus du type représenté sur la figure 1 annexée, bien qu'ils aient déjà donné lieu à une large exploitation, présentent de nombreux inconvénients, tels que défaut d'étanchéité du sertissage de l'opercule 60, risque d'introduction dans le boîtier 10 de liquide pendant l'opération de réglage dans un bain thermostaté, coûts cumulés du joint 64, de l'opercule 60 et de l'opération de sertissage en 62.

Dans un autre mode de réalisation de détecteur de température connu à bilame, le trou de travail 18 est taraudé et reçoit une vis de réglage laissée à demeure qui agit sur la lame fixe 50 où porte un élément de contact similaire à la lamelle 50. Dans ce cas l'étanchéité est généralement obtenu par dépot de colle sur le pas de vis. Ce second mode de réalisation connu présente sensiblement les mêmes inconvénients précités que je mode de réalisation représenté sur la figure 1.

Le document US-A-3507037 divulgue un détecteur de température qui comprend :
- un carter en matériau bon conducteur thermique, par exemple en cuivre, qui loge
- un ensemble autonome qui comprend :
   . un bilame,
   . au moins un contact électrique associé, et
   . un corps support en matériau électriquement isolant adapté pour supporter le bilame et le contact électrique associé.

Plus précisément selon le document US-A-3507037, le corps support est formé d'une ampoule en verre qui contient le bilame et le contact électrique associé. Le document US-A-3507037 précise par ailleurs que l'ensemble à bilame, qui constitue un interrupteur thermostatique, est calibré avant assemblage, pour répondre à une condition de température prédéterminée.

Le document FR-A-2267731 décrit un indicateur de température pour appareil de friture comprenant un corps cylindrique en métal qui supporte d'une part un bilame, d'autre part un contact électrique associé placé en regard, lequel contact électrique associé est formé d'un axe comprenant un élément décentré de sorte que sa rotation permette de régler l'écartement entre le bilame et ledit contact.

La présente invention a pour but de proposer un nouveau détecteur de température à bilame plus économique et présentant une meilleure étanchéité que les dispositifs antérieurs connus.

Ce but est atteint selon la présente invention grâce à un détecteur de température, notamment pour la surveillance de la température des moteurs de véhicules automobiles du type défini dans la revendication 1 annexée.

Grâce à la structure ainsi proposée par la présente invention, l'ensemble comprenant le corps support, l'élément bilame et le contact électrique associé peut être préréglé avant d'être disposé dans le boîtier de détecteur. Plus précisément la position relative entre le bilame et le contact électrique associé peut être contrôlée avec précision, si nécessaire par déformation permanente de ce dernier, avant de placer ces éléments dans le boîtier.

Ainsi selon l'invention, il n'est plus nécessaire de prévoir un trou de passage d'outil de réglage dans la paroi du boîtier. De ce fait la présente invention permet de supprimer tout problème d'étanchéité.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 précédemment décrite représente une vue schématique en coupe longitudinale d'un détecteur de température conforme à l'état de la technique,
- les figures 2 et 3 représentent deux vues respectivement orthogonales entre elles, en coupe axiale longitudinale d'un détecteur de température conforme à un mode de réalisation préférentiel de la présente invention, et
- les figures 4 et 5 représentent deux vues schématiques en coupe longitudinale axiale, similaires à la figure 2, de variantes de réalisation de détecteur conforme à la présente invention.

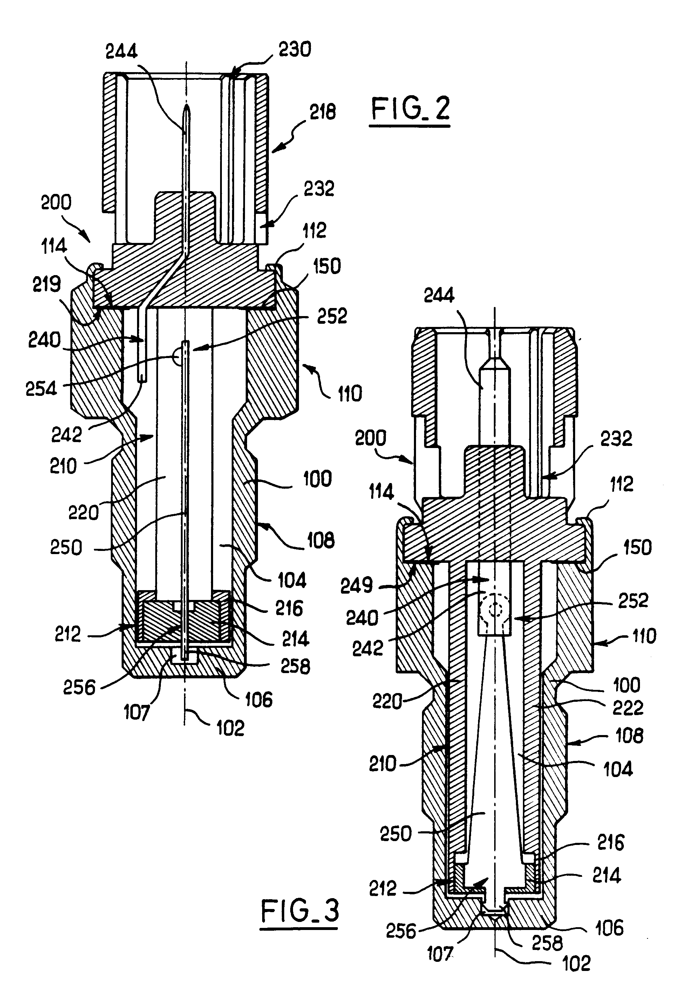

On aperçoit sur les figures 2 et 3 annexées un détecteur de température conforme à la présente invention comprenant un boîtier 100 qui reçoit un ensemble de contact 200 formé d'un corps support 210, d'un bilame 250 et d'une lame de contact associée 240.

Le boîtier 100 est réalisé en un matériau bon conducteur sur le plan thermique et électrique.

De préférence le boîtier 100 est généralement symétrique de révolution autour d'un axe 102. Le boîtier 100 définit une chambre 104 borgne s'étendant selon l'axe 102. Ainsi la paroi de fond 106 du boîtier 100 s'étend transversalement à l'axe 102.

De façon connue en soi une partie 108 de la surface extérieure du boîtier peut être filetée, tandis qu'une seconde partie 110 de la surface externe du boîtier 100 est de section droite hexagonale ou équivalente pour permettre de fixer aisément le détecteur sur toute paroi délimitant le milieu dont on souhaite surveiller la température.

Le corps support 210 est réalisé en matériau électriquement isolant.

De préférence le corps support 210 est composé d'un élément de base 212, d'un élément de tête 218 et de deux entretoises 220, 222 reliant l'élément de base 112 à l'élément de tête 218.

En position installée l'élément de base 212 est adjacent au fond 106 du boîtier 110 tandis que l'élément de tête 218 obture le contour d'ouverture du boîtier 110. Pour cela le boîtier 110 est serti sur l'élément de tête 218 comme représenté en 112.

De préférence un joint d'étanchéité annulaire 150 est intercalé entre deux portées d'appui homologues 114, 219 ménagées respectivement sur le boîtier 110 et l'élément de tête, transversalement à l'axe 102.

En position installée les deux entretoises 220, 222 s'étendent parallèlement à l'axe 102.

Le corps support 210 est de préférence réalisé en matériau thermodurcissable.

Le bilame 250 est fixé sur l'élément de base 212 par tout moyen classique approprié. le corps support 210 peut être surmoulé sur le bilame 250. Le bilame 250 peut également être chassé dans l'élément de base 212 du corps support 210. Après assemblage le bilame 250 s'étend ainsi entre les deux entretoises 220, 222, sensiblement parallèlement à celles-ci.Son extrémité libre est placée au voisinage de l'élément de tête 218 tout en restant éloignée de celle-ci pour autoriser une libre déflexion du bilame 250.

Comme montré sur la figure 2 de préférence l'extrémité libre 252 du bilame 250 est pourvue d'un grain de contact 254.

Ce grain de contact 250 est ainsi prévu en regard d'une lame de contact 240 portée par l'élément de tête 218. Plus précisément la lame de contact 240 traverse l'élément de tête 218. L'extrémité 242 de lame de contact 240 interne à la chambre 104 peut ainsi coopérer avec le grain de contact 254. La seconde extrémité 244 de la lame de contact 240 externe à l'élément de tête 218 est conçue pour être raccordée à des liaisons externes.

Pour cela l'élément de tête 218 peut être conformé en corps de connecteur comme représenté sur les figures 2 et 3.

On notera que selon le mode de réalisation particulier, mais bien entendu non limitatif représenté sur les figures 2 et 3, l'élément de tête 218 est conformé en corps de connecteur susceptible de recevoir un élément de connecteur homologue immobilisé à la façon d'un montage à baîonnette, grâce à des rainures longitudinales 230 et des découpes périphériques 232 ménagées dans l'élément de tête 218.

Selon le mode de réalisation représenté sur la figure 2 la lame de contact 240 n'est pas rectiligne. La lame 240 est bien entendu susceptible de nombreux modes de réalisation.

Par ailleurs, on notera que comme représenté sur les figures 2 et 3, l'élément de base 212 du corps support peut être formé de différentes pièces assemblées entre elles.

En l'espèce, l'élément de base 212 est formé d'un noyau 214 et d'une collerette 216. Le noyau 214 est fixé sur le bilame 250. Pour cela comme indiqué précédemment le noyau 214 peut être surmoulé sur l'extrémité 256 du bilame ou encore cette extrémité 256 du bilame 250 peut être chassée dans le noyau 214. La collerette 216 est venue de moulage avec les entretoises 220 et 222. Le noyau 214 est assemblé par tout moyen classique approprié, par exemple par simple chassage dans la collerette 216.

Par ailleurs de préférence comme représenté sur les figures 2 et 3 annexées le bilame 250 traverse l'élément de base 212 du corps support 210 pour venir en contact électrique et thermique avec le fond 106 du boîtier 100.

Selon le mode de réalisation particulier représenté sur les figures 2 et 3 l'extrémité 256 du bilame 250 émerge au-delà de l'élément de base 212 sous forme d'une structure 258 ayant la forme générale d'une pointe de flêche conçue pour être ancrée dans un logement 107 correspondant prévu dans le fond 106 du boîtier. Le logement 107 est centré sur l'axe 102. L'homme de l'art comprendra aisément que l'ancrage de la structure 258 dans le logement 107 du boîtier permet d'assurer une bonne liaison électrique et thermique entre le bilame 250 et le boîtier 100.

Comme indiqué précédemment la structure de détecteur proposé dans le cadre de la présente invention permet d'éliminer tout orifice de travail dans la paroi du boîtier 110 dans la mesure où l'ensemble 200 peut être préréglé avant assemblage sur le boîtier 100. C'est-à-dire que la position relative du grain de contact 254 porté par le bilame 252 et de la lame de contact associée 240 peut être préréglée avant assemblage sur le boîtier 100. Ce réglage peut être opéré soit dans l'air soit dans un liquide thermostaté. Dans ce dernier cas de préférence l'ensemble 200 est soumis à un solvant, pour éliminer toute trace de liquide thermostaté avant assemblage dans le boîtier 100.

Bien entendu la présente invention n'est pas limitée au mode de réalisation particulier qui vient d'être décrit en regard des figures 2 et 3.

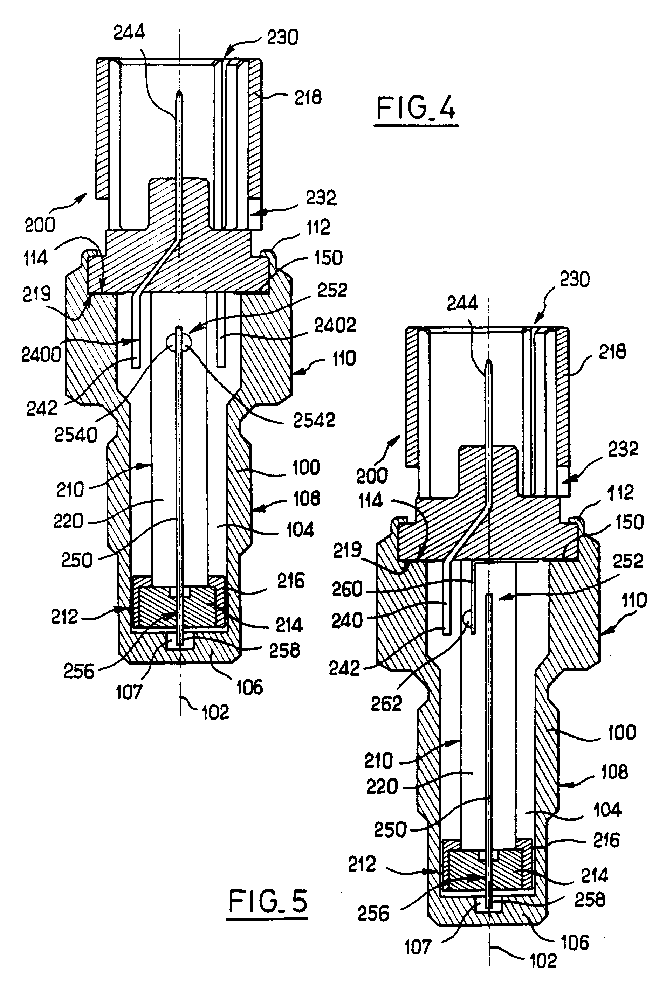

Par exemple comme représenté sur la figure 4 on peut prévoir de disposer deux lames de contact 2400, 2402 sur l'élément de tête 218 respectivement de part et d'autre du bilame 250, et de placer deux grains de contact 2540, 2542 sur l'extrémité libre 252 du bilame 250, respectivement en regard des lames de contact précitées. On obtient ainsi deux contacts électriques travaillant respectivement à l'ouverture et à la fermeture.

Par ailleurs, comme représenté sur la figure 5 on peut prévoir d'intercaler une lame souple élastique 260 entre la lame de contact 240 et l'extrémité libre 252 du bilame. La lame 260 peut le cas échéant être munie d'un grain de contact 262. Dans ce cas le bilame 250 n'assure pas de fonction électrique mais joue simplement le rôle de poutre mécanique susceptible, en fonction de la temperature détectée, de contrôler le déplacement de la lame de contact 260 par rapport à la lame 240.

La lame 260 peut être reliée au boîtier 110. Dans ce cas, l'information de sortie du détecteur est prise entre l'extrémité 244 de la lame 240 et le boîtier 110.

On peut encore envisager d'utiliser une lame 260 traversant l'élément de tête 218 parallèlement à la lame 240 tout en étant électriquement isolée de celle-ci.

## Revendications

1. Détecteur de température, notamment pour la surveillance de la température de moteurs de véhicules automobiles comprenant :
- un carter (100) en matériau bon conducteur thermique qui loge,
- un ensemble (200) autonome qui comprend :
. un bilame (250),
. au moins un contact électrique associé (240), et
. un corps support (210) en matériau électriquement isolant adapté pour supporter le bilame (250) et le contact électrique associé (240), caractérisé par le fait que le corps support (210) comprend un élément de base (212) dans lequel est ancré le bilame (250), un élément de tête (218) dans lequel est fixé le contact associé (240), et deux entretoises (220, 222) sensiblement parallèles reliant l'élément de base (212) et l'élément de tête (218), de telle sorte que la position relative du bilame (250) et du contact électrique associé (240) puisse être préréglée avant assemblage de l'ensemble (200) sur le carter (100).

2. Détecteur selon la revendication 1, caractérisé par le fait que la position relative du bilame (250) et du contact électrique associé (240), est régleé par déformation permanente du contact électrique associé (240), avant assemblage de l'ensemble (200) sur le carter (100).

3. Détecteur selon l'une des revendications 1 ou 2, caractérisé par le fait que le bilame (250) s'étend sensiblement parallèlement aux entretoises (220, 222) en position de repos.

4. Détecteur selon l'une des revendications 1 à 3, caractérisé par le fait que le bilame (250) porte à son extrémité libre (252) un grain de contact (254) apte à venir reposer contre le contact électrique associé (240).

5. Détecteur selon l'une des revendications 1 à 4, caractérisé par le fait que le corps support (210) porte deux lames de contact (2400, 2402) respectivement de part et d'autre de l'extrémité libre du bilame (250).

6. Détecteur selon l'une des revendications 1 à 5, caractérisé par le fait que le bilame (250) forme une poutre mécanique et qu'au moins une lame de contact électriquement conductrice en matériau souple élastique est intercalée entre l'extrémité libre du bilame (250) et le contact électrique associé (240).

7. Détecteur selon l'une des revendications 1 à 6, caractérisé par le fait que le bilame (250) est pourvu d'une structure (258) permettant un ancrage du bilame sur le fond (106) du carter afin d'assurer à la fois une liaison électrique et thermique entre le bilame (250) et le carter (100).

8. Détecteur selon la revendication 7, caractérisé par le fait que la structure d'accrochage (258) à la forme générale d'une pointe de flêche.

9. Détecteur selon l'une des revendications 1 à 8, caractérisé par le fait que le carter (110) est serti sur l'élément de tête (218).

10. Détecteur selon l'une des revendications 1 à 9, caractérisé par le fait que l'élément de tête (218) est conformé en corps de connecteur.

11. Détecteur selon l'une des revendications 1 à 10, caractérisé par le fait que le corps support (210) est réalisé en matériau thermodurcissable.

12. Détecteur selon l'une des revendications 1 à 11, caractérisé par le fait que l'élément de base (212) est réalisé par assemblage de deux éléments (214, 216), l'un recevant l'extrémité (256) du bilame (250), l'autre solidaire des entretoises (220, 222).

## Claims

1. A temperature detector, in particular for monitoring the temperature of motor vehicle engines, the detector comprising:
a housing (100) of a material that is a good conductor of heat and that houses:
a self-contained unit (200) which comprises:
a bimetallic strip (250);
at least one associated electrical contact (240); and
a support body (210) of electrically insulating material that is adapted to support the bimetallic strip (250) and the associated electrical contact (240);
characterized by the fact that the support body (210) comprises a base element (212) in which the bimetallic strip (250) is secured, a head element (218) in which the associated contact (240) is fixed, and two substantially parallel spacers (220, 222) interconnecting the base element (212) and the head element (218) in such a manner that the relative position of the bimetallic strip (250) and the associated electrical contact (240) can be preadjusted prior to the self-contained unit (200) being assembled in the housing (100).

2. A detector according to claim 1, characterized by the fact that the relative position of the bimetallic strip (250) and the associated electrical contact (240) is adjusted by permanent deformation of the associated electrical contact (240) prior to the self-contained unit (200) being assembled in the housing (100).

3. A detector according to claim 1 or 2, characterized by the fact that in the rest position, the bimetallic strip (250) extends substantially parallel to the spacers (220, 222).

4. A detector according to any one of claims 1 to 3, characterized by the fact that the bimetallic strip (250) carries a contact bead (254) at its free end (252) that is suitable for coming to rest against the associated electrical contact (240).

5. A detector according to any one of claims 1 to 4, characterized by the fact that the support body (210) carries two contact blades (2400, 2402) on respective opposite sides of the free end of the bimetallic strip (250).

6. A detector according to any one of claims 1 to 5, characterized by the fact that the bimetallic strip (250) forms a mechanical beam and that at least one electrically conductive contact blade of resilient flexible material is interposed between the free end of the bimetallic strip (250) and the associated electrical contact (240).

7. A detector according to any one of claims 1 to 6, characterized by the fact that the bimetallic strip (250) is provided with an anchoring structure (258) enabling the bimetallic strip to be secured to the bottom (106) of the housing in order to provide simultaneous electrical and thermal connection between the bimetallic strip (250) and the housing (100).

8. A detector according to claim 7, characterized by the fact that the anchoring structure (258) has the general shape of an arrow head.

9. A detector according to any one of claims 1 to 8, characterized by the fact that the housing (100) is crimped to the head element (218).

10. A detector according to any one of claims 1 to 9, characterized by the fact that the head element (218) is shaped to constitute a connector body.

11. A detector according to any one of claims 1 to 10, characterized by the fact that the support body (210) is made of a thermosetting material.

12. A detector according to any one of claims 1 to 11, characterized by the fact that the base element (212) is made by assembling together two elements (214, 216), one of which receives the end (256) of the bimetallic strip (250), and the other of which is secured to the spacers (220, 222).

## Patentansprüche

1. Temperaturdetektor, insbesondere für die Überwachung der Temperatur von Kraftfahrzeugmotoren, mit
- einem Gehäuse (100) aus einem gut wärmeleitenden Material, in dem
- eine unabhängige Baugruppe (200) aufgenommen ist, die
ein Bimetallelement (250),
wenigstens einen zugehörigen elektrischen Kontakt (240) und
einen Haltekörper (210) aus einem elektrisch isolierenden Material umfaßt, der so ausgebildet ist, daß er das Bimetallelement (250) und den zugehörigen elektrischen Kontakt (240) hält, dadurch gekennzeichnet, daß der Haltekörper (210) ein Grundelement (212), in dem das Bimetallelement (250) verankert ist, ein Kopfteil (218), in dem der zugehörige Kontakt (240) befestigt ist, und zwei im wesentlichen parallele Streben (220, 222) umfaßt, die das Grundelement (212) und das Kopfteil (218) derart verbinden, daß die Position bezüglich des Bimetallelementes (250) und bezüglich des zugehörigen elektrischen Kontaktes (240) vor der Montage der Baugruppe (200) am Gehäuse (100) voreingestellt werden kann.

2. Detektor nach Anspruch 1, dadurch gekennzeichnet, daß die Position bezüglich des Bimetallelementes (250) und bezüglich des zugehörigen elektrischen Kontaktes (240) durch eine dauerhafte Verformung des zugehörigen elektrischen Kontaktes (240) vor der Montage der Baugruppe (200) am Gehäuse (100) eingestellt wird.

3. Detektor nach einem der Ansprüche 1 oder 2, dadurch gekennzeichnet, daß das Bimetallelement (250) in der Ausgangsposition im wesentlichen parallel zu den beiden Streben (220, 222) verläuft.

4. Detektor nach einem der Ansprüch 1 bis 3, dadurch gekennzeichnet, daß das Bimetallelement (250) an seinem freien Ende (252) eine Kontaktperle (254) trägt, die am zugehörigen elektrischen Kontakt (240) zur Anlage kommen kann.

5. Detektor nach einem der Ansprüche 1 bis 4, dadurch gekennzeichnet, daß der Haltekörper (210) zwei Kontaktzungen (2400, 2402) auf beiden Seiten des freien Endes des Bimetallelementes (250) jeweils trägt.

6. Detektor nach einem der Ansprüche 1 bis 5, dadurch gekennzeichnet, daß das Bimetallelement (250) einen mechanischen Träger bildet und daß wenigstens eine elektrisch leitende Kontaktzunge aus einem weich-elastischen Material zwischen dem freien Ende des Bimetallelementes (250) und dem zugehörigen elektrischen Kontakt (240) angeordnet ist.

7. Detektor nach einem der Ansprüche 1 bis 6, dadurch gekennzeichnet, daß das Bimetallelement (250) mit einer Einrichtung (258) versehen ist, die eine Verankerung des Bimetallelementes am Boden (106) des Gehäuses erlaubt, um gleichzeitig eine elektrische und thermische Verbindung zwischen dem Bimetallelement (250) und dem Gehäuse (100) sicherzustellen.

8. Detektor nach Anspruch 7, dadurch gekennzeichnet, daß die Einhakeinrichtung (258) im wesentlichen die Form einer Pfeilspitze hat.

9. Detektor nach einem der Ansprüche 1 bis 8, dadurch gekennzeichnet, daß das Gehäuse (110) auf das Kopfteil (218) aufgesetzt ist.

10. Detektor nach einem der Ansprüche 1 bis 9, dadurch gekennzeichnet, daß das Kopfteil (218) wie ein Steckerkörper geformt ist.

11. Detektor nach einem der Ansprüche 1 bis 10, dadurch gekennzeichnet, daß der Haltekörper (210) aus einem duroplastischen Material gebildet ist.

12. Detektor nach einem der Ansprüche 1 bis 11, dadurch gekennzeichnet, daß das Grundelement (212) aus dem Zusammenbau von zwei Elementen (214, 216) besteht, von denen eines das Ende (256) des Bimetallelementes (250) aufnimmt und von denen das andere fest mit den Stegen (220, 222) verbunden ist.
